# EUROPEAN PATENT APPLICATION

(11) **EP 1 956 535 A1**
(43) Date of publication of application: **13.08.2008**
(21) Application number: 07102173.7
(22) Date of filing: 12.02.2007
(51) Int. Cl.: G06Q 10/00

(54) **Providing personal certificate warnings in a system and method for processing messages composed by a user**

(71) Applicant: Research In Motion Limited, Waterloo, Ontario N2L 3W8 (CA)
(72) Inventor: Bender, Christopher L, Tavistock Ontario N0B 2R0 (CA); Brown, Michael S, Waterloo Ontario N2K 4B1 (CA)
(74) Representative: Rickard, David John

(57) **Abstract**

A system and method for processing messages composed by a user of a computing device is described herein. After an instruction is received from the user (420) to send an encoded message (e.g. a message that is encrypted, signed, or both encrypted and signed, depending on the implementation), a status verification is performed (440) at a user's computing device in respect of one or more certificates, which includes at least a user's personal certificate, prior to the sending of the encoded message to a recipient. If the status verification is unsuccessful, the user is provided with message processing options (480) that allow the user to determine how the message should be further processed. The user is provided with at least the option to not send the message (500a).

## Description

Embodiments described herein relate generally to the processing of messages, such as e-mail messages, and more specifically to a system and method in which the status of certificates used in the processing of encoded messages may be verified.

Data in electronic mail ("e-mail") messages may be secured using one of a number of known protocols. Some of these protocols, such as Secure Multiple Internet Mail Extensions ("S/MIME") for example, rely on public and private encryption keys to provide confidentiality and integrity, and on a Public Key Infrastructure (PKI) to communicate information that provides authentication and authorization. Data encoded using a private key of a private key/public key pair can only be decoded using the corresponding public key of the pair, and data encoded using a public key of a private key/public key pair can only be decoded using the corresponding private key of the pair. The authenticity of public keys used in the encoding of messages is validated using digital certificates ("certificates"). A certificate will typically comprise the public key of the certificate holder, as well as other identification-related information.

Certificates are digital documents that are typically issued by certification authorities. In order to trust a particular public key, the public key typically needs to be issued by a certification authority that is also trusted, or by an entity associated with the trusted certification authority. The relationship between a trusted certification authority and an issued public key can be represented by a series of related certificates, also referred to as a certificate chain. The certificate chain can be identified and followed to determine the validity of a certificate.

If a particular individual wishes to send an encrypted message to a user of a computing device, the user's public key is required, and accordingly the individual will generally require a certificate that has been issued to the user. On the other hand, if the user of a computing device wishes to send a particular individual a signed message, the user will need to employ his private key. After the individual receives the signed message from the user, the user's certificate containing the corresponding public key would be required to verify the digital signature of the signed message and to validate the authenticity of that public key. From the user's perspective, a certificate issued to him or her, and which typically contains his or her public key, may be referred to as that user's "personal certificate".

Consider a situation where a user composes a message to be sent to a recipient identified by the user, where at least some of the data of the message is to be signed. If the user's personal certificate has expired, for example, the user may not be aware of this. However, this would not prevent the user from signing and sending messages, and therefore, the signed message may be sent in known manner without error. Nevertheless, when the recipient receives the signed message, the digital signature of the signed message is verified at the recipient's device, and an attempt is made to validate the authenticity of the user's public key. The recipient may, at that time, discover that the certificate of the user who sent the message has already expired.
Accordingly, the recipient is left with the burden of deciding what action should be taken in respect of the received message, in light of this discovery.

### General

In a broad aspect, there may be provided a method of processing messages composed by a user of a computing device, the steps of the method performed at the computing device, the method may comprise the steps of: receiving an instruction from the user to send a message composed at the computing device, wherein at least some data of the message to be sent is subject to security encoding; locating one or more certificates on the computing device, wherein the one or more certificates includes at least a personal certificate, wherein the user is the subject of the personal certificate; performing a status verification at the computing device prior to sending the message, wherein at least one status property associated with the one or more certificates is verified; if the status verification is successful, sending the message; and if the status verification is unsuccessful, providing the user with a plurality of message processing options, receiving a user selection from the plurality of message processing options, and processing the message in accordance with the user selection; wherein the plurality of message processing options includes at least an option to cancel the instruction from the user to send the message.

### Brief Description of the Drawings

For a better understanding of embodiments described herein, and to show more clearly how they may be carried into effect, reference will now be made, by way of example, to the accompanying drawings in which:
FIG. 1 is a block diagram of a mobile device in one example implementation;
FIG. 2 is a block diagram of a communication subsystem component of the mobile device of FIG. 1;
FIG. 3 is a block diagram of a node of a wireless network;
FIG. 4 is a block diagram illustrating components of a host system in one example configuration;
FIG. 5 is a block diagram showing an example of a certificate chain;
FIG. 6 is a block diagram illustrating components of an example of an encoded message;
FIG. 7 is a flowchart illustrating steps in a method of processing messages composed by a user of a computing device in accordance with at least one embodiment; and
FIGS. 8A to 8C are screenshots illustrating screens of a graphical user interface displayed on the display of a computing device in accordance with one example implementation.

### Description of Preferred Embodiments

Embodiments described herein are generally directed to a system and method that provides users of a computing device with greater control over certificates that may be used in the communication of encoded messages. In particular, the validity of a user's personal certificate or of an associated certificate chain can be verified at the user's computing device prior to sending an encoded message to a recipient. If the verification is unsuccessful, the user may, for example, opt to not send the message to the recipient. Accordingly, the user can take pre-emptive action that may minimize the likelihood that the recipient will encounter errors when processing encoded messages communicated between the user and the recipient.

In a broad aspect, there is provided a method of processing messages composed by a user of a computing device, the steps of the method performed at the computing device, the method comprising the steps of: receiving an instruction from the user to send a message composed at the computing device, wherein at least some data of the message to be sent is subject to security encoding; locating one or more certificates on the computing device, wherein the one or more certificates includes at least a personal certificate, wherein the user is the subject of the personal certificate; performing a status verification at the computing device prior to sending the message, wherein at least one status property associated with the one or more certificates is verified; if the status verification is successful, sending the message; and if the status verification is unsuccessful, providing the user with a plurality of message processing options, receiving a user selection from the plurality of message processing options, and processing the message in accordance with the user selection; wherein the plurality of message processing options includes at least an option to cancel the instruction from the user to send the message.

In at least one embodiment, the computing device is a mobile device.

These and other aspects and features of various embodiments will be described in greater detail below.

Some embodiments described herein make use of a mobile station. A mobile station is a two-way communication device with advanced data communication capabilities having the capability to communicate with other computer systems, and is also referred to herein generally as a mobile device. A mobile device may also include the capability for voice communications. Depending on the functionality provided by a mobile device, it may be referred to as a data messaging device, a two-way pager, a cellular telephone with data messaging capabilities, a wireless Internet appliance, or a data communication device (with or without telephony capabilities). A mobile device communicates with other devices through a network of transceiver stations.

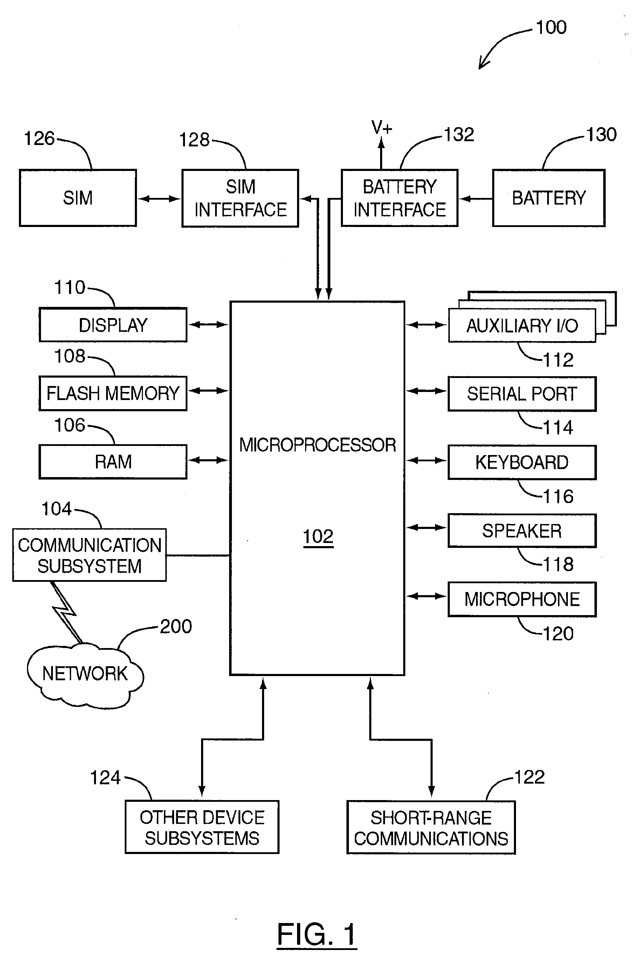

To aid the reader in understanding the structure of a mobile device and how it communicates with other devices, reference is made to FIGS. 1 through 3.

Referring first to FIG. 1, a block diagram of a mobile device in one example implementation is shown generally as 100. Mobile device 100 comprises a number of components, the controlling component being microprocessor 102. Microprocessor 102 controls the overall operation of mobile device 100. Communication functions, including data and voice communications, are performed through communication subsystem 104. Communication subsystem 104 receives messages from and sends messages to a wireless network 200. In this example implementation of mobile device 100, communication subsystem 104 is configured in accordance with the Global System for Mobile Communication (GSM) and General Packet Radio Services (GPRS) standards. The GSM/GPRS wireless network is used worldwide and it is expected that these standards will be superseded eventually by Enhanced Data GSM Environment (EDGE) and Universal Mobile Telecommunications Service (UMTS). New standards are still being defined, but it is believed that they will have similarities to the network behaviour described herein, and it will also be understood by persons skilled in the art that the invention is intended to use any other suitable standards that are developed in the future. The wireless link connecting communication subsystem 104 with network 200 represents one or more different Radio Frequency (RF) channels, operating according to defined protocols specified for GSM/GPRS communications. With newer network protocols, these channels are capable of supporting both circuit switched voice communications and packet switched data communications.

Although the wireless network associated with mobile device 100 is a GSM/GPRS wireless network in one example implementation of mobile device 100, other wireless networks may also be associated with mobile device 100 in variant implementations. Different types of wireless networks that may be employed include, for example, data-centric wireless networks, voice-centric wireless networks, and dual-mode networks that can support both voice and data communications over the same physical base stations. Combined dual-mode networks include, but are not limited to, Code Division Multiple Access (CDMA) or CDMA2000 networks, GSM/GPRS networks (as mentioned above), and future third-generation (3G) networks like EDGE and UMTS. Some older examples of data-centric networks include the Mobitex™ Radio Network and the DataTAC™ Radio Network. Examples of older voice-centric data networks include Personal Communication Systems (PCS) networks like GSM and Time Division Multiple Access (TDMA) systems.

Microprocessor 102 also interacts with additional subsystems such as a Random Access Memory (RAM) 106, flash memory 108, display 110, auxiliary input/output (I/O) subsystem 112, serial port 114, keyboard 116, speaker 118, microphone 120, short-range communications 122 and other devices 124.

Some of the subsystems of mobile device 100 perform communication-related functions, whereas other subsystems may provide "resident" or on-device functions. By way of example, display 110 and keyboard 116 may be used for both communication-related functions, such as entering a text message for transmission over network 200, and device-resident functions such as a calculator or task list. Operating system software used by microprocessor 102 is typically stored in a persistent store such as flash memory 108, which may alternatively be a read-only memory (ROM) or similar storage element (not shown). Those skilled in the art will appreciate that the operating system, specific device applications, or parts thereof, may be temporarily loaded into a volatile store such as RAM 106.

Mobile device 100 may send and receive communication signals over network 200 after required network registration or activation procedures have been completed. Network access is associated with a subscriber or user of a mobile device 100. To identify a subscriber, mobile device 100 requires a Subscriber identity Module or "SIM" card 126 to be inserted in a SIM interface 128 in order to communicate with a network. SIM 126 is one type of a conventional "smart card" used to identify a subscriber of mobile device 100 and to personalize the mobile device 100, among other things. Without SIM 126, mobile device 100 is not fully operational for communication with network 200. By inserting SIM 126 into SIM interface 128, a subscriber can access all subscribed services. Services could include: web browsing and messaging such as e-mail, voice mail, Short Message Service (SMS), and Multimedia Messaging Services (MMS). More advanced services may include: point of sale, field service and sales force automation. SIM 126 includes a processor and memory for storing information. Once SIM 126 is inserted in SIM interface 128, it is coupled to microprocessor 102. In order to identify the subscriber, SIM 126 contains some user parameters such as an International Mobile Subscriber identity (IMSI). An advantage of using SIM 126 is that a subscriber is not necessarily bound by any single physical mobile device. SIM 126 may store additional subscriber information for a mobile device as well, including datebook (or calendar) information and recent call information.

Mobile device 100 is a battery-powered device and includes a battery interface 132 for receiving one or more rechargeable batteries 130. Battery interface 132 is coupled to a regulator (not shown), which assists battery 130 in providing power V+ to mobile device 100. Although current technology makes use of a battery, future technologies such as micro fuel cells may provide the power to mobile device 100.

Microprocessor 102, in addition to its operating system functions, enables execution of software applications on mobile device 100. A set of applications that control basic device operations, including data and voice communication applications, will normally be installed on mobile device 100 during its manufacture. Another application that may be loaded onto mobile device 100 would be a personal information manager (PIM). A PIM has functionality to organize and manage data items of interest to a subscriber, such as, but not limited to, e-mail, calendar events, voice mails, appointments, and task items. A PIM application has the ability to send and receive data items via wireless network 200. PIM data items may be seamlessly integrated, synchronized, and updated via wireless network 200 with the mobile device subscriber's corresponding data items stored and/or associated with a host computer system. This functionality creates a mirrored host computer on mobile device 100 with respect to such items. This can be particularly advantageous where the host computer system is the mobile device subscriber's office computer system.

Additional applications may also be loaded onto mobile device 100 through network 200, auxiliary I/O subsystem 112, serial port 114, short-range communications subsystem 122, or any other suitable subsystem 124. This flexibility in application installation increases the functionality of mobile device 100 and may provide enhanced on-device functions, communication-related functions, or both. For example, secure communication applications may enable electronic commerce functions and other such financial transactions to be performed using mobile device 100.

Serial port 114 enables a subscriber to set preferences through an external device or software application and extends the capabilities of mobile device 100 by providing for information or software downloads to mobile device 100 other than through a wireless communication network. The alternate download path may, for example, be used to load an encryption key onto mobile device 100 through a direct and thus reliable and trusted connection to provide secure device communication.

Short-range communications subsystem 122 provides for communication between mobile device 100 and different systems or devices, without the use of network 200. For example, subsystem 122 may include an infrared device and associated circuits and components for short-range communication. Examples of short range communication would include standards developed by the Infrared Data Association (IrDA), Bluetooth, and the 802.11 family of standards developed by IEEE.

In use, a received signal such as a text message, an e-mail message, or web page download will be processed by communication subsystem 104 and input to microprocessor 102. Microprocessor 102 will then process the received signal for output to display 110 or alternatively to auxiliary I/O subsystem 112. A subscriber may also compose data items, such as e-mail messages, for example, using keyboard 116 in conjunction with display 110 and possibly auxiliary I/O subsystem 112. Auxiliary subsystem 112 may include devices such as: a touch screen, mouse, track ball, infrared fingerprint detector, or a roller wheel with dynamic button pressing capability. Keyboard 116 is an alphanumeric keyboard and/or telephone-type keypad. A composed item may be transmitted over network 200 through communication subsystem 104.

For voice communications, the overall operation of mobile device 100 is substantially similar, except that the received signals would be output to speaker 118, and signals for transmission would be generated by microphone 120. Alternative voice or audio I/O subsystems, such as a voice message recording subsystem, may also be implemented on mobile device 100. Although voice or audio signal output is accomplished primarily through speaker 118, display 110 may also be used to provide additional information such as the identity of a calling party, duration of a voice call, or other voice call related information.

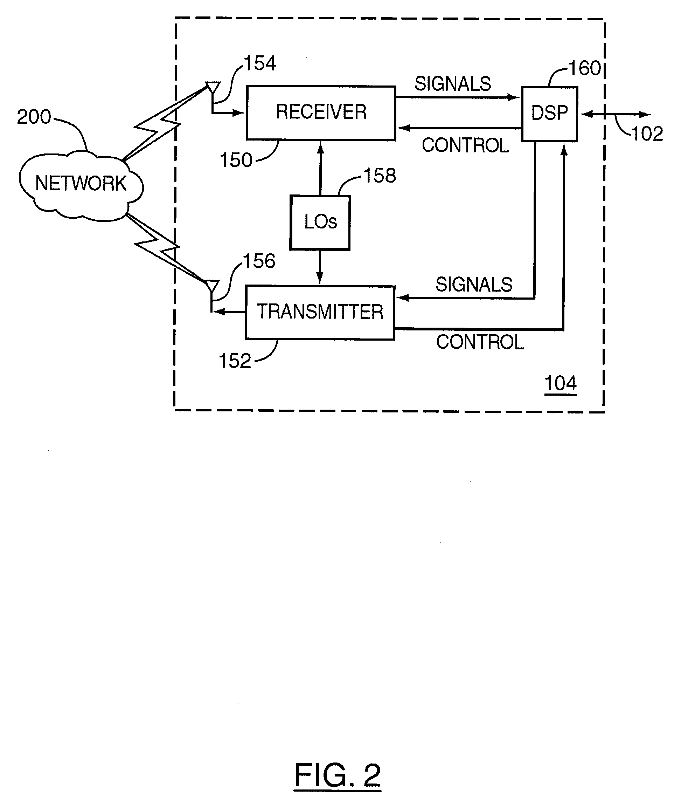

Referring now to FIG. 2, a block diagram of the communication subsystem component 104 of FIG. 1 is shown. Communication subsystem 104 comprises a receiver 150, a transmitter 152, one or more embedded or internal antenna elements 154, 156, Local Oscillators (LOs) 158, and a processing module such as a Digital Signal Processor (DSP) 160.

The particular design of communication subsystem 104 is dependent upon the network 200 in which mobile device 100 is intended to operate, thus it should be understood that the design illustrated in FIG. 2 serves only as one example. Signals received by antenna 154 through network 200 are input to receiver 150, which may perform such common receiver functions as signal amplification, frequency down conversion, filtering, channel selection, and analog-to-digital (A/D) conversion. A/D conversion of a received signal allows more complex communication functions such as demodulation and decoding to be performed in DSP 160. In a similar manner, signals to be transmitted are processed, including modulation and encoding, by DSP 160. These DSP-processed signals are input to transmitter 152 for digital-to-analog (D/A) conversion, frequency up conversion, filtering, amplification and transmission over network 200 via antenna 156. DSP 160 not only processes communication signals, but also provides for receiver and transmitter control. For example, the gains applied to communication signals in receiver 150 and transmitter 152 may be adaptively controlled through automatic gain control algorithms implemented in DSP 160.

The wireless link between mobile device 100 and a network 200 may contain one or more different channels, typically different RF channels, and associated protocols used between mobile device 100 and network 200. A RF channel is a limited resource that must be conserved, typically due to limits in overall bandwidth and limited battery power of mobile device 100.

When mobile device 100 is fully operational, transmitter 152 is typically keyed or turned on only when it is sending to network 200 and is otherwise turned off to conserve resources. Similarly, receiver 150 is periodically turned off to conserve power until it is needed to receive signals or information (if at all) during designated time periods.

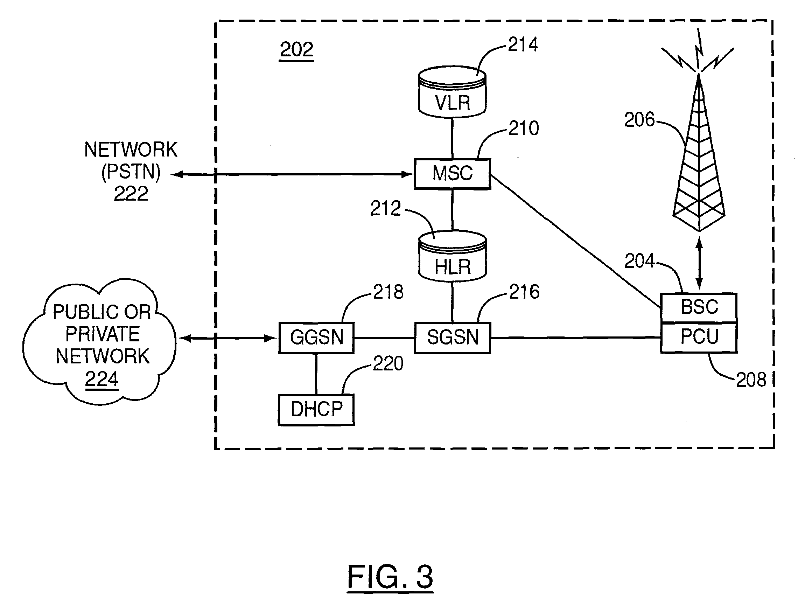

Referring now to FIG. 3, a block diagram of a node of a wireless network is shown as 202. In practice, network 200 comprises one or more nodes 202. Mobile device 100 communicates with a node 202 within wireless network 200. In the example implementation of FIG. 3, node 202 is configured in accordance with General Packet Radio Service (GPRS) and Global Systems for Mobile (GSM) technologies. Node 202 includes a base station controller (BSC) 204 with an associated tower station 206, a Packet Control Unit (PCU) 208 added for GPRS support in GSM, a Mobile Switching Center (MSC) 210, a Home Location Register (HLR) 212, a Visitor Location Registry (VLR) 214, a Serving GPRS Support Node (SGSN) 216, a Gateway GPRS Support Node (GGSN) 218, and a Dynamic Host Configuration Protocol (DHCP) 220. This list of components is not meant to be an exhaustive list of the components of every node 202 within a GSM/GPRS network, but rather a list of components that are commonly used in communications through network 200.

In a GSM network, MSC 210 is coupled to BSC 204 and to a landline network, such as a Public Switched Telephone Network (PSTN) 222 to satisfy circuit switched requirements. The connection through PCU 208, SGSN 216 and GGSN 218 to the public or private network (Internet) 224 (also referred to herein generally as a shared network infrastructure) represents the data path for GPRS capable mobile devices. In a GSM network extended with GPRS capabilities, BSC 204 also contains a Packet Control Unit (PCU) 208 that connects to SGSN 216 to control segmentation, radio channel allocation and to satisfy packet switched requirements. To track mobile device location and availability for both circuit switched and packet switched management, HLR 212 is shared between MSC 210 and SGSN 216. Access to VLR 214 is controlled by MSC 210.

Station 206 is a fixed transceiver station. Station 206 and BSC 204 together form the fixed transceiver equipment. The fixed transceiver equipment provides wireless network coverage for a particular coverage area commonly referred to as a "cell". The fixed transceiver equipment transmits communication signals to and receives communication signals from mobile devices within its cell via station 206. The fixed transceiver equipment normally performs such functions as modulation and possibly encoding and/or encryption of signals to be transmitted to the mobile device in accordance with particular, usually predetermined, communication protocols and parameters, under control of its controller. The fixed transceiver equipment similarly demodulates and possibly decodes and decrypts, if necessary, any communication signals received from mobile device 100 within its cell. Communication protocols and parameters may vary between different nodes. For example, one node may employ a different modulation scheme and operate at different frequencies than other nodes.

For all mobile devices 100 registered with a specific network, permanent configuration data such as a user profile is stored in HLR 212. HLR 212 also contains location information for each registered mobile device and can be queried to determine the current location of a mobile device. MSC 210 is responsible for a group of location areas and stores the data of the mobile devices currently in its area of responsibility in VLR 214. Further VLR 214 also contains information on mobile devices that are visiting other networks. The information in VLR 214 includes part of the permanent mobile device data transmitted from HLR 212 to VLR 214 for faster access. By moving additional information from a remote HLR 212 node to VLR 214, the amount of traffic between these nodes can be reduced so that voice and data services can be provided with faster response times and at the same time requiring less use of computing resources.

SGSN 216 and GGSN 218 are elements added for GPRS support; namely packet switched data support, within GSM. SGSN 216 and MSC 210 have similar responsibilities within wireless network 200 by keeping track of the location of each mobile device 100. SGSN 216 also performs security functions and access control for data traffic on network 200. GGSN 218 provides internetworking connections with external packet switched networks and connects to one or more SGSN's 216 via an Internet Protocol (IP) backbone network operated within the network 200. During normal operations, a given mobile device 100 must perform a "GPRS Attach" to acquire an IP address and to access data services. This requirement is not present in circuit switched voice channels as Integrated Services Digital Network (ISDN) addresses are used for routing incoming and outgoing calls. Currently, all GPRS capable networks use private, dynamically assigned IP addresses, thus requiring a DHCP server 220 connected to the GGSN 218. There are many mechanisms for dynamic IP assignment, including using a combination of a Remote Authentication Dial-In User Service (RADIUS) server and DHCP server. Once the GPRS Attach is complete, a logical connection is established from a mobile device 100, through PCU 208, and SGSN 216 to an Access Point Node (APN) within GGSN 218. The APN represents a logical end of an IP tunnel that can either access direct Internet compatible services or private network connections. The APN also represents a security mechanism for network 200, insofar as each mobile device 100 must be assigned to one or more APNs and mobile devices 100 cannot exchange data without first performing a GPRS Attach to an APN that it has been authorized to use. The APN may be considered to be similar to an Internet domain name such as "myconnection.wireless.com".

Once the GPRS Attach is complete, a tunnel is created and all traffic is exchanged within standard IP packets using any protocol that can be supported in IP packets. This includes tunneling methods such as IP over IP as in the case with some IPSecurity (IPsec) connections used with Virtual Private Networks (VPN). These tunnels are also referred to as Packet Data Protocol (PDP) Contexts and there are a limited number of these available in the network 200. To maximize use of the PDP Contexts, network 200 will run an idle timer for each PDP Context to determine if there is a lack of activity. When a mobile device 100 is not using its PDP Context, the PDP Context can be deallocated and the IP address returned to the IP address pool managed by DHCP server 220.

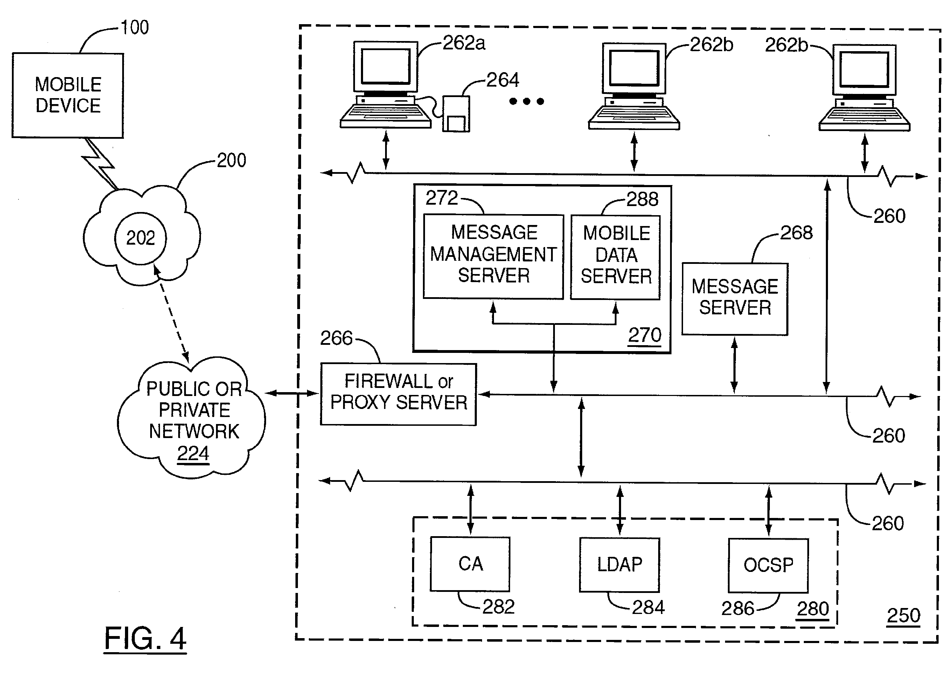

Referring now to FIG. 4, a block diagram illustrating components of a host system in one example configuration is shown. Host system 250 will typically be a corporate office or other local area network (LAN), but may instead be a home office computer or some other private system, for example, in variant implementations. In this example shown in FIG. 4, host system 250 is depicted as a LAN of an organization to which a user of mobile device 100 belongs.

LAN 250 comprises a number of network components connected to each other by LAN connections 260. For instance, a user's desktop computer 262a with an accompanying cradle 264 for the user's mobile device 100 is situated on LAN 250. Cradle 264 for mobile device 100 may be coupled to computer 262a by a serial or a Universal Serial Bus (USB) connection, for example. Other user computers 262b are also situated on LAN 250, and each may or may not be equipped with an accompanying cradle 264 for a mobile device. Cradle 264 facilitates the loading of information (e.g. PIM data, private symmetric encryption keys to facilitate secure communications between mobile device 100 and LAN 250) from user computer 262a to mobile device 100, and may be particularly useful for bulk information updates often performed in initializing mobile device 100 for use. The information downloaded to mobile device 100 may include certificates used in the exchange of messages. It will be understood by persons skilled in the art that user computers 262a, 262b will typically be also connected to other peripheral devices not explicitly shown in FIG. 4.

Furthermore, only a subset of network components of LAN 250 are shown in FIG. 4 for ease of exposition, and it will be understood by persons skilled in the art that LAN 250 will comprise additional components not explicitly shown in FIG. 4, for this example configuration. More generally, LAN 250 may represent a smaller part of a larger network [not shown] of the organization, and may comprise different components and/or be arranged in different topologies than that shown in the example of FIG. 4.

In this example, mobile device 100 communicates with LAN 250 through a node 202 of wireless network 200 and a shared network infrastructure 224 such as a service provider network or the public Internet. Access to LAN 250 may be provided through one or more routers [not shown], and computing devices of LAN 250 may operate from behind a firewall or proxy server 266.

In a variant implementation, LAN 250 comprises a wireless VPN router [not shown] to facilitate data exchange between the LAN 250 and mobile device 100. The concept of a wireless VPN router is new in the wireless industry and implies that a VPN connection can be established directly through a specific wireless network to mobile device 100. The possibility of using a wireless VPN router has only recently been available and could be used when the new Internet Protocol (IP) Version 6 (IPV6) arrives into IP-based wireless networks. This new protocol will provide enough IP addresses to dedicate an IP address to every mobile device, making it possible to push information to a mobile device at any time. An advantage of using a wireless VPN router is that it could be an off-the-shelf VPN component, not requiring a separate wireless gateway and separate wireless infrastructure to be used. A VPN connection would preferably be a Transmission Control Protocol (TCP)/IP or User Datagram Protocol (UDP)/IP connection to deliver the messages directly to mobile device 100 in this variant implementation.

Messages intended for a user of mobile device 100 are initially received by a message server 268 of LAN 250. Such messages may originate from any of a number of sources. For instance, a message may have been sent by a sender from a computer 262b within LAN 250, from a different mobile device [not shown] connected to wireless network 200 or to a different wireless network, or from a different computing device or other device capable of sending messages, via the shared network infrastructure 224, and possibly through an application service provider (ASP) or Internet service provider (ISP), for example.

Message server 268 typically acts as the primary interface for the exchange of messages, particularly e-mail messages, within the organization and over the shared network infrastructure 224. Each user in the organization that has been set up to send and receive messages is typically associated with a user account managed by message server 268. One example of a message server 268 is a Microsoft Exchange™ Server. In some implementations, LAN 250 may comprise multiple message servers 268. Message server 268 may also be adapted to provide additional functions beyond message management, including the management of data associated with calendars and task lists, for example.

When messages are received by message server 268, they are typically stored in a message store [not explicitly shown], from which messages can be subsequently retrieved and delivered to users. For instance, an e-mail client application operating on a user's computer 262a may request the e-mail messages associated with that user's account stored on message server 268. These messages would then typically be retrieved from message server 268 and stored locally on computer 262a.

When operating mobile device 100, the user may wish to have e-mail messages retrieved for delivery to the handheld. An e-mail client application operating on mobile device 100 may also request messages associated with the user's account from message server 268. The e-mail client may be configured (either by the user or by an administrator, possibly in accordance with an organization's information technology (IT) policy) to make this request at the direction of the user, at some pre-defined time interval, or upon the occurrence of some pre-defined event. In some implementations, mobile device 100 is assigned its own e-mail address, and messages addressed specifically to mobile device 100 are automatically redirected to mobile device 100 as they are received by message server 268.

To facilitate the wireless communication of messages and message-related data between mobile device 100 and components of LAN 250, a number of wireless communications support components 270 may be provided. In this example implementation, wireless communications support components 270 comprise a message management server 272, for example. Message management server 272 is used to specifically provide support for the management of messages, such as e-mail messages, that are to be handled by mobile devices. Generally, while messages are still stored on message server 268, message management server 272 can be used to control when, if, and how messages should be sent to mobile device 100. Message management server 272 also facilitates the handling of messages composed on mobile device 100, which are sent to message server 268 for subsequent delivery.

For example, message management server 272 may: monitor the user's "mailbox" (e.g. the message store associated with the user's account on message server 268) for new e-mail messages; apply user-definable filters to new messages to determine if and how the messages will be relayed to the user's mobile device 100; compress and encrypt new messages (e.g. using an encryption technique such as Data Encryption Standard (DES) or Triple DES) and push them to mobile device 100 via the shared network infrastructure 224 and wireless network 200; and receive messages composed on mobile device 100 (e.g. encrypted using Triple DES), decrypt and decompress the composed messages, re-format the composed messages if desired so that they will appear to have originated from the user's computer 262a, and re-route the composed messages to message server 268 for delivery.

Certain properties or restrictions associated with messages that are to be sent from and/or received by mobile device 100 can be defined (e.g. by an administrator in accordance with IT policy) and enforced by message management server 272. These may include whether mobile device 100 may receive encrypted and/or signed messages, minimum encryption key sizes, whether outgoing messages must be encrypted and/or signed, and whether copies of all secure messages sent from mobile device 100 are to be sent to a pre-defined copy address, for example.

Message management server 272 may also be adapted to provide other control functions, such as only pushing certain message information or pre-defined portions (e.g. "blocks") of a message stored on message server 268 to mobile device 100. For example, when a message is initially retrieved by mobile device 100 from message server 268, message management server 272 is adapted to push only the first part of a message to mobile device 100, with the part being of a pre-defined size (e.g. 2 KB). The user can then request more of the message, to be delivered in similar-sized blocks by message management server 272 to mobile device 100, possibly up to a maximum pre-defined message size.

Accordingly, message management server 272 facilitates better control over the type of data and the amount of data that is communicated to mobile device 100, and can help to minimize potential waste of bandwidth or other resources.

It will be understood by persons skilled in the art that message management server 272 need not be implemented on a separate physical server in LAN 250 or other network. For example, some or all of the functions associated with message management server 272 may be integrated with message server 268, or some other server in LAN 250. Furthermore, LAN 250 may comprise multiple message management servers 272, particularly in variant implementations where a large number of mobile devices needs to be supported.

Embodiments described herein relate generally to certificates used in the processing of encoded messages, such as e-mail messages that are encrypted and/or signed. While Simple Mail Transfer Protocol (SMTP), RFC822 headers, and Multipurpose Internet Mail Extensions (MIME) body parts may be used to define the format of a typical e-mail message not requiring encoding, Secure/MIME (S/MIME), a version of the MIME protocol, may be used in the communication of encoded messages (i.e. in secure messaging applications). S/MIME enables end-to-end authentication and confidentiality, and protects data integrity and privacy from the time an originator of a message sends a message until it is decoded and read by the message recipient. Other known standards and protocols may be employed to facilitate secure message communication, such as Pretty Good Privacy™ (PGP), OpenPGP, and others known in the art.

Secure messaging protocols such as S/MIME rely on public and private encryption keys to provide confidentiality and integrity, and on a Public Key Infrastructure (PKI) to communicate information that provides authentication and authorization. Data encoded using a private key of a private key/public key pair can only be decoded using the corresponding public key of the pair, and data encoded using a public key of a private key/public key pair can only be decoded using the corresponding private key of the pair. It is intended that private key information never be made public, whereas public key information may be shared.

For example, if a sender wishes to send a message to a recipient in encrypted form, the recipient's public key is used to encrypt a message, which can then be decrypted only using the recipient's private key. Alternatively, in some encoding techniques, a one-time session key is generated and used to encrypt the body of a message, typically with a symmetric encryption technique (e.g. Triple DES). The session key is then encrypted using the recipient's public key (e.g. with a public key encryption algorithm such as RSA), which can then be decrypted only using the recipient's private key. The decrypted session key can then be used to decrypt the message body. The message header may be used to specify the particular encryption scheme that must be used to decrypt the message. Other encryption techniques based on public key cryptography may be used in variant implementations. However, in each of these cases, only the recipient's private key may be used to facilitate decryption of the message, and in this way, the confidentiality of messages can be maintained.

As a further example, a sender may sign a message using a digital signature. A digital signature is a digest of the message (e.g. a hash of the message) encoded using the sender's private key, which can then be appended to the outgoing message. To verify the digital signature of the message when received, the recipient uses the same technique as the sender (e.g. using the same standard hash algorithm) to obtain a digest of the received message. The recipient also uses the sender's public key to decode the digital signature, in order to obtain what should be a matching digest for the received message. If the digests of the received message do not match, this suggests that either the message content was changed during transport and/or the message did not originate from the sender whose public key was used for verification. Digital signature algorithms are designed in such a way that only someone with knowledge of the sender's private key should be able to encode a signature that the recipient will decode correctly using the sender's public key. Therefore, by verifying a digital signature in this way, authentication of the sender and message integrity can be maintained.

An encoded message may be encrypted, signed, or both encrypted and signed. The authenticity of public keys used in these operations is validated using certificates. A certificate is a digital document issued by a certificate authority (CA). Certificates are used to authenticate the association between users and their public keys, and essentially, provides a level of trust in the authenticity of the users' public keys. Certificates contain information about the certificate holder, with certificate contents typically formatted in accordance with an accepted standard (e.g. X.509).

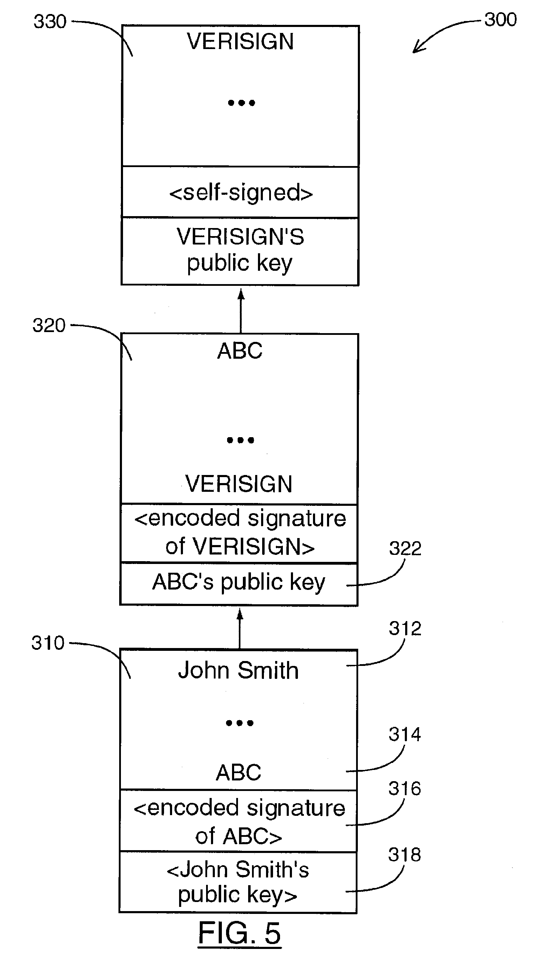

Consider FIG. 5, in which an example certificate chain 300 is shown. Certificate 310 issued to "John Smith" is an example of a certificate issued to an individual, which may be referred to as an end entity certificate. End entity certificate 310 typically identifies the certificate holder 312 (i.e. John Smith in this example) and the issuer of the certificate 314, and includes a digital signature of the issuer 316 and the certificate holder's public key 318. Certificate 310 will also typically include other information and attributes that identify the certificate holder (e.g. e-mail address, organization name, organizational unit name, location, etc.). When the individual composes a message to be sent to a recipient, it is customary to include that individual's certificate 310 with the message.

The certificate holder identified in a certificate is also referred to as the "subject" of that certificate. From the perspective of a given certificate holder, a certificate issued to him or her, and which typically contains his or her public key, may be referred to as a "personal certificate". Accordingly, in the example of FIG. 5, certificate 310 may be regarded as John Smith's personal certificate, as John Smith is the subject of certificate 310.

For a public key to be trusted, its issuing organization must be trusted. The relationship between a trusted CA and a user's public key can be represented by a series of related certificates, also referred to as a certificate chain. The certificate chain can be identified and followed to determine the validity of a certificate.

For instance, in the example certificate chain 300 shown in FIG. 5, the recipient of a message purported to be sent by John Smith may wish to verify the trust status of certificate 310 attached to the received message. To verify the trust status of certificate 310 on a recipient's computing device (e.g. computer 262a of FIG. 4) for example, the certificate 320 of issuer ABC is obtained, and used to verify that certificate 310 was indeed signed by issuer ABC. Certificate 320 may already be stored in a certificate store on the recipient's computing device, or it may need to be retrieved from a certificate source (e.g. LDAP server 284 of FIG. 4 or some other public or private LDAP server). If certificate 320 is already stored in the recipient's computing device and the certificate has been designated as trusted by the recipient, then certificate 310 is considered to be trusted since it chains to a stored, trusted certificate.

However, in the example shown in FIG. 5, certificate 330 is also required, when verifying the trust status of certificate 310. Certificate 330 is self-signed, and is referred to as a "root certificate". Accordingly, certificate 320 may be referred to as an "intermediate certificate" in certificate chain 300; any given certificate chain to a root certificate, assuming a chain to the root certificate can be determined for a particular end entity certificate, may contain zero, one, or multiple intermediate certificates. If certificate 330 is a root certificate issued by a trusted source (from a large certificate authority such as Verisign or Entrust, for example), then certificate 310 may be considered to be trusted since it chains to a trusted certificate. The implication is that both the sender and the recipient of the message trust the source of the root certificate 330. If a particular certificate cannot be chained to a trusted certificate, that certificate may be considered to be "not trusted".

Certificate servers store information about certificates and lists identifying certificates that have been revoked. These certificate servers can be accessed to obtain certificates and to verify certificate authenticity and revocation status. For example, a Lightweight Directory Access Protocol (LDAP) server may be used to obtain certificates, and an Online Certificate Status Protocol (OCSP) server may be used to verify certificate revocation status.

Standard e-mail security protocols typically facilitate secure message transmission between non-mobile computing devices (e.g. computers 262a, 262b of FIG. 4; remote desktop devices). Referring again to FIG. 4, in order that signed messages received from senders may be read from mobile device 100 and encrypted messages be sent to those senders, mobile device 100 is adapted to store certificates and associated public keys of other individuals. Certificates stored on a user's computer 262a will typically be downloaded from computer 262a to mobile device 100 through cradle 264, for example.

Certificates stored on computer 262a and downloaded to mobile device 100 are not limited to certificates associated with individuals but may also include certificates issued to CAs, for example. Certain certificates stored in computer 262a and/or mobile device 100 can also be explicitly designated as "trusted" by the user. Accordingly, when a certificate is received by a user on mobile device 100, it can be verified on mobile device 100 by matching the certificate with one stored on mobile device 100 and designated as trusted, or otherwise determined to be chained to a trusted certificate.

Mobile device 100 may also be adapted to store the private key of the public key/private key pair associated with the user, so that the user of mobile device 100 can sign outgoing messages composed on mobile device 100, and decrypt messages sent to the user encrypted with the user's public key. The private key may be downloaded to mobile device 100 from the user's computer 262a through cradle 264, for example. The private key is preferably exchanged between the computer 262a and mobile device 100 so that the user may share one identity and one method for accessing messages.

User computers 262a, 262b can obtain certificates from a number of sources, for storage on computers 262a, 262b and/or mobile devices (e.g. mobile device 100). These certificate sources may be private (e.g. dedicated for use within an organization) or public, may reside locally or remotely, and may be accessible from within an organization's private network or through the Internet, for example. In the example shown in FIG. 4, multiple PKI servers 280 associated with the organization reside on LAN 250. PKI servers 280 include a CA server 282 for issuing certificates, an LDAP server 284 used to search for and download certificates (e.g. for individuals within the organization), and an OCSP server 286 used to verify the revocation status of certificates.

Certificates may be retrieved from LDAP server 284 by a user computer 262a, for example, to be downloaded to mobile device 100 via cradle 264. However, in a variant implementation, LDAP server 284 may be accessed directly (i.e. "over the air" in this context) by mobile device 100, and mobile device 100 may search for and retrieve individual certificates through a mobile data server 288. Similarly, mobile data server 288 may be adapted to allow mobile device 100 to directly query OCSP server 286 to verify the revocation status of certificates.

In variant implementations, only selected PKI servers 280 may be made accessible to mobile devices (e.g. allowing certificates to be downloaded only from a user's computer 262a, 262b, while allowing the revocation status of certificates to be checked from mobile device 100).

In variant implementations, certain PKI servers 280 may be made accessible only to mobile devices registered to particular users, as specified by an IT administrator, possibly in accordance with an IT policy, for example.

Other sources of certificates [not shown] may include a Windows certificate store, another secure certificate store on or outside LAN 250, and smart cards, for example.

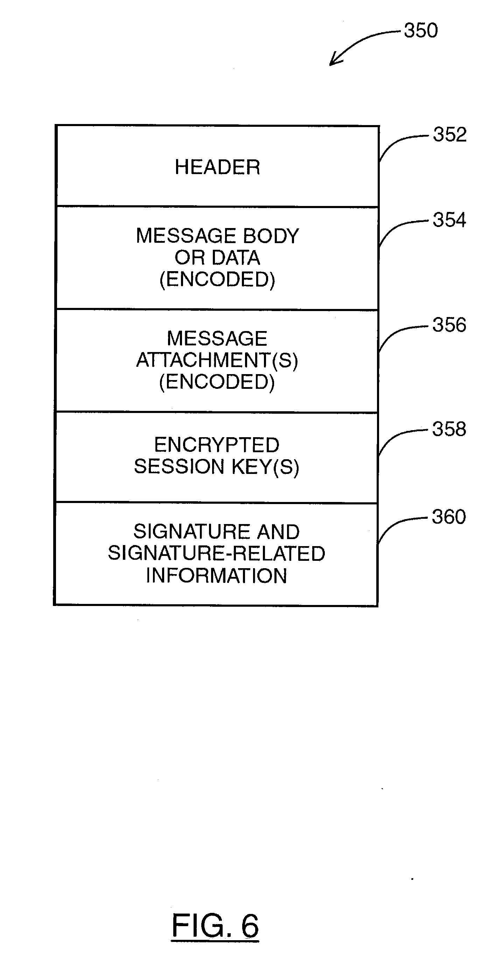

Referring now to FIG. 6, a block diagram illustrating components of an example of an encoded message, as may be received by a message server (e.g. message server 268 of FIG. 4), is shown generally as 350. Encoded message 350 typically includes one or more of the following: a header portion 352, an encoded body portion 354, optionally one or more encoded attachments 356, one or more encrypted session keys 358, and signature and signature-related information 360. For example, header portion 352 typically includes addressing information such as "To", "From", and "CC" addresses, and may also include message length indicators, and sender encryption and signature scheme identifiers, for example. Actual message content normally includes a message body or data portion 354 and possibly one or more attachments 356, which may be encrypted by the sender using a session key. If a session key was used, it is typically encrypted for each intended recipient using the respective public key for each recipient, and included in the message at 358. If the message was signed, a signature and signature-related information 360 are also included. This may include the sender's certificate, for example.

The format for an encoded message as shown in FIG. 6 is provided by way of example only, and persons skilled in the art will understand that encoded messages may exist in other formats. For example, depending on the specific messaging scheme used, components of an encoded message may appear in a different order than shown in FIG. 6 (e.g. encrypted session keys 358 may precede message body 354), and an encoded message may include fewer, additional, or different components, which may depend on whether the encoded message is encrypted, signed or both.

Embodiments described herein are generally directed to a system and method that provides users of a computing device with greater control over certificates that may be used in the communication of encoded messages.

As an example, consider the situation identified above where a user composes a message at a computing device, where the message is to be sent to a recipient identified by the user, and where at least some of the data of the message is to be signed. If the user's personal certificate has expired, for example, the user may not be aware of this. The user might only become aware of this by opening a certificate browser and viewing details of the personal certificate. However, the user may not know or decide to do this, particularly before sending the message.

In any event, even if the user's personal certificate has expired, this would not prevent the user from signing and sending messages, and therefore, the signed message may be sent in known manner without error. The signed message may be sent without error, because only the user's private key, which will typically be stored on the user's computing device, is required to perform signing functions. In particular, the user's personal certificate, which comprises the user's corresponding public key and other information, is not required to sign the message.

Furthermore, while a copy of the user's personal certificate is also usually stored on the user's computing device, this is not always the case. So long as the user's private key is available at a user's computing device, message data can be signed at the computing device, whether or not the user's personal certificate is available at the computing device. Since the user's personal certificate is not required to perform signing functions, actions in respect of the user's personal certificate (e.g. checking the expiry date) are also not required to perform the signing functions.

However, in the above example, when the recipient receives the signed message, and the digital signature of the signed message is verified at the recipient's device, an attempt may be made to validate the authenticity of the user's public key. The recipient may, at that time, discover that the personal certificate of the user who sent the message has already expired. Accordingly, the recipient is left with the burden of deciding what action should be taken in respect of the received message.

Consider a further example in which a user composes a message at a computing device to be sent to a recipient identified by the user, where at least some of the data of the message is to be encrypted. If the user's personal certificate has expired, for example, the user may not be aware of this. The user may only become aware of this by opening a certificate browser and viewing details of the personal certificate. However, the user may not know or decide to do this, particularly before sending the message.

In any event, even if the user's personal certificate has expired, this would not prevent the user from sending messages with encrypted data, and therefore, the message may be sent in known manner. Only the public key of each intended recipient of the message, which may be already stored on the user's computing device or retrieved to the user's computing device (e.g. from a certificate server), is required to perform encryption functions. When a recipient receives an encrypted message from the user, message data can be decrypted with the recipient's private key.

Some known messaging applications may be adapted to check the validity of a recipient's certificate prior to sending a message with encrypted data to that particular recipient. However, the user's own personal certificate, which comprises the user's corresponding public key and other information, is not required to encrypt data of messages to be sent by the user. Since the user's personal certificate is not required to perform the encryption functions, actions in respect of the user's personal certificate (e.g. checking the expiry date) are also not required to perform the encryption functions.

However, consider the situation where the recipient wishes to send a reply to the received message to the user, where at least some data of the reply is also to be encrypted. In respect of this reply, the recipient will require the public key of the user to encrypt that data to the user. The user's certificate may be already stored on the recipient's device or retrieved from a certificate source (e.g. a certificate server). Alternatively, the user's certificate may have accompanied the original message itself. An attempt may then be made by the recipient of the original message to validate the authenticity of the user's public key prior to sending the reply. The recipient may, at that time, discover that the certificate of the user who sent the original message has already expired. Accordingly, the recipient is left with the burden of deciding what action should be taken in respect of the reply to be sent.

Embodiments described herein relate generally to a system and method that allows at least some of the burden of determining whether to trust a user's personal certificate, that would otherwise be borne by the recipient of an encoded message sent by the user, to instead be borne by the user sending the message. In this manner, the user may instead deal with certain problems with a user's personal certificate that the recipient would otherwise face, in advance, before the user sends an encoded message.

In a broad aspect, there is provided a method of processing messages composed by a user of a computing device, the steps of the method performed at the computing device, the method comprising the steps of: receiving an instruction from the user to send a message composed at the computing device, wherein at least some data of the message to be sent is subject to security encoding; locating one or more certificates on the computing device, wherein the one or more certificates includes at least a personal certificate, wherein the user is the subject of the personal certificate; performing a status verification at the computing device prior to sending the message, wherein at least one status property associated with the one or more certificates is verified; if the status verification is successful, sending the message; and if the status verification is unsuccessful, providing the user with a plurality of message processing options, receiving a user selection from the plurality of message processing options, and processing the message in accordance with the user selection; wherein the plurality of message processing options includes at least an option to cancel the instruction from the user to send the message.

In one embodiment, the steps of the method are performed by a messaging application residing and executing on the computing device.

In one embodiment, an application may be configured such that the steps to be performed when the status verification is unsuccessful are only performed when a corresponding check status verification mode is enabled. In a variant embodiment, this mode may be enabled or disabled by the user. In a variant embodiment, this mode may be enabled or disabled in accordance with a security policy (e.g. IT Policy).

In one embodiment, the computing device is a mobile device.

In one embodiment, at least some data of the message to be sent is encrypted, signed, or both encrypted and signed.

For greater certainty, in exemplary embodiments, an application may be configured to perform the status verification in accordance with one of the following modes:
- when a signed message without encryption is to be sent by the user;
- when a signed message without encryption or when a signed and encrypted message is to be sent by the user;
- when an encrypted message that is not signed is to be sent by the user;
- when an encrypted message that is not signed or when a signed and encrypted message is to be sent by the user; or
- whenever an encrypted and/or signed message is to be sent by the user.
The application may be subject to a default configuration. The configuration may be set or changed by a user, and/or in accordance with a security policy (e.g. IT Policy), for example. Furthermore, in exemplary embodiments, the status verification is initiated automatically by the application after receiving the instruction to send the message from the user.

In one embodiment, at least one of the one or more certificates may be retrieved to the computing device from a certificate source (e.g. a certificate server) prior to performing the status verification.

In one embodiment, the one or more certificates belong to a certificate chain that comprises the personal certificate. Accordingly, at least one status property of one or more certificates in the certificate chain is verified in performing the status verification.

In one embodiment, one or more servers may be queried for data required to verify the at least one status property, in performing the status verification. One or more status properties of a certificate may be updated by querying the one or more servers. This query may be performed by a background thread. This query may be made without user intervention.

In one embodiment, in addition to the option to cancel the instruction from the user to send the message, at least one additional message processing option is also provided. The plurality of message processing options may comprise an option to send the message even when the status verification is unsuccessful. The plurality of message processing options may comprise an option to send the message, and to automatically send subsequent messages, even when a status verification performed in respect of a subsequent message is unsuccessful, or without performing a status verification in respect of a subsequent message. The plurality of message processing options may comprise an option to view certificate data of the one or more certificates, which can be selected before the user selects a different message processing option. The foregoing options are provided by way of example only, and the plurality of message processing options provided in a given implementation may include all, some or none of the foregoing options, and may include one or more options other than those described herein.

In one embodiment, the plurality of message processing options is displayed to the user in the form of a menu. The menu may be displayed in a dialog box, for example.

In one embodiment, data identifying one or more verification errors identified in performing the status verification may be displayed to the user when the status verification is unsuccessful. This data may be displayed with the plurality of message processing options, or may be displayed with certificate data upon a request by the user to view a personal certificate or other certificate, for example.

Although a number of examples have been described herein with respect to a personal certificate that has expired, it will be understood by persons skilled in the art that these examples are provided herein for illustration purposes only. In accordance with at least one embodiment, the status verification performed at the computing device prior to sending the message requires that at least one status property (e.g. revocation status, trust status, validity/expiry date, key strength) associated with the one or more certificates be verified. In exemplary embodiments, if there are one or more errors in the verification of the at least one status property, the status verification is deemed to be unsuccessful. The corresponding verification error(s) may be logged and/or displayed to the user, for example.

In one embodiment, the status verification will be deemed to be unsuccessful if one or more of the following verification errors are identified:
- Revoked certificate chain - a certificate in the certificate chain has been revoked
- Invalid certificate chain - a certificate in the certificate chain is being used before its "not valid before" date, or after its "not valid after" date
- Weak certificate chain - a certificate in the certificate chain contains a public key that is deemed weak
- Improper certificate chain - the certificate chain is too long, as specified by a certificate authority
- Incomplete certificate chain - there is no root certificate
- Unsupported certificate chain - an unsupported certificate in the certificate chain was identified, which could not be processed
- Untrusted certificate chain - none of the certificates in the certificate chain are considered to be trusted by the user
- Unverified certificate chain - some other verification error was encountered (e.g. there is a problem with the root certificate's self-signature, there is a problem with the signature on an intermediate certificate, invalid certificate data has been identified, some other processing error)

The foregoing headings and descriptions are provided by way of example only, and it will be understood by persons skilled in the art that variants may be employed in a given implementation. Furthermore, in variant embodiments, only a subset of the verification errors described above may be checked for and identified in performing a status verification. In variant embodiments, different verification errors may be checked for and identified, instead of or in addition to the verification errors described above or a subset thereof, in performing a status verification.

For example, it will be understood by persons skilled in the art that some of these verification errors may be detected based on the status properties of the personal certificate alone, rather than on a certificate chain that comprises the personal certificate. For instance, performing the status verification may comprise checking whether the personal certificate only has been revoked, is invalid, is weak, or is unsupported (or some combination thereof), rather than identifying the corresponding verification errors in respect of the certificate chain.

As a further example, in respect of a status verification, in embodiments where the trust status of a given certificate is checked to ensure that the user's personal certificate chains to a certificate trusted by the user, this may be of limited value as a certificate that is trusted by the user will not necessarily be considered as trusted by the recipient of a message sent by that user. Accordingly, the recipient may still encounter errors if the trust status of the certificate of the user sending the message is validated at the recipient's device. In systems where it is possible to identify the trusted certificates on a potential recipient's device (e.g. by querying a server that stores such information), in a variant embodiment, the trust status of a user's certificate from the recipient's perspective may be determined in a status verification performed at the user's computing device.

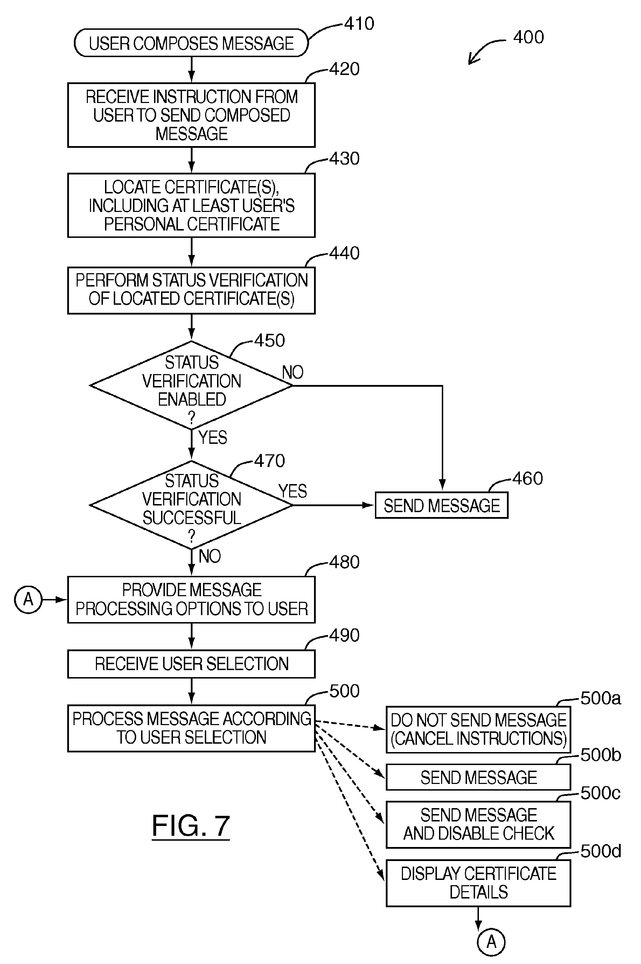

Referring now to FIG. 7, a flowchart illustrating steps in a method of processing messages composed by a user of a computing device in accordance with at least one embodiment is shown generally as 400. Additional details of some of the features described below in respect of the steps of method 400 may be described earlier in the present specification.

The steps of method 400 are performed at the computing device. In one embodiment, at least some of the steps of the method are performed by a messaging application that executes and resides on a mobile device (e.g. mobile device 100 of FIG. 1). In variant embodiments, the messaging application may be residing and executing on a computing device other than a mobile device. Furthermore, the messaging application need not be a stand-alone application, and the functionality of the messaging application may be implemented in one or more applications executing and residing on the mobile or other computing device.

Generally, in method 400, after an instruction is received from the user to send an encoded message (e.g. a message that is encrypted, signed, or both encrypted and signed, depending on the implementation), a status verification is performed at a user's computing device in respect of one or more certificates, which includes at least a user's personal certificate, prior to the sending of the encoded message to a recipient. If the status verification is unsuccessful, the user is provided with message processing options that allow the user to determine how the message should be further processed. The user is provided with at least the option to not send the message. The steps of method 400 are described in further detail below.

Method 400 commences at 410 where the user has composed a message at the computing device, where at least some data of the message to be sent is to be subject to a security encoding that triggers the performance of the remaining steps of method 400. For example, the messaging application may be configured to perform the remaining steps of method 400 whenever at least some of the data of the message to be sent is to be signed (e.g. using a private key of the user stored on the computing device) and/or encrypted. After composition of the message is complete, the user directs the messaging application to send the message to one or more recipients identified by the user. For example, the user may complete composition of the message, and press a "send" button or select a "send" item from a menu.

At step 420, the instruction to send the message composed by the user at 410 is received by the messaging application. Further steps of method 400 are initiated automatically by the messaging application after receiving the instruction to send the message from the user.

At step 430, one or more certificates, including at least a personal certificate where the user is the subject of the personal certificate, is located on the computing device. Depending on the nature of the verification errors to be checked in performing a status verification at step 440, either only the personal certificate (see e.g. certificate 310 of FIG. 5), or all certificates in a certificate chain (see e.g. certificate chain 300 of FIG. 5) that includes the personal certificate may need to be located at this step. The certificates to be located may be stored temporarily in a volatile memory and/or retrieved from a persistent store on the computing device.

In a variant embodiment, the messaging application may be configured to retrieve any certificates from a certificate store (e.g. a certificate server) that cannot initially be located at step 430. This may be performed automatically, without user intervention.

At step 440, a status verification is performed at the computing device prior to sending the message to the one or more recipients identified by the user at 410. In performing the status verification, at least one status property (e.g. revocation status, trust status, validity/expiry date, key strength) associated with the personal certificate or the chain of certificates located at step 430 is verified. As described earlier in the specification, the specific status properties to be verified at this step will depend on what verification errors the messaging application is configured to check for.

In one embodiment, where required, one or more servers may be queried for data required to verify the at least one status property in performing the status verification at step 440. This query may be performed in a background thread. This query may be made without user intervention.

At step 450, optionally, a check may be made to confirm that a check status verification mode is enabled. For example, the messaging application may be configured to allow the mode to be disabled (e.g. by the user or in accordance with IT Policy). When the mode is disabled, messages may be automatically sent at step 460 without notifying the user at this point in time, of any verification errors. In one embodiment, the status verification is still performed at step 440, and the results may be logged for future use. However, in a variant embodiment, the check at step 450 may precede step 440, such that the performance of any status verification is bypassed, when the mode is disabled.

At step 470, it is determined whether the status verification performed at step 440 is successful. If so, the message may be sent automatically to the one or more recipients at step 460, without further user intervention. Otherwise, the flow of method steps proceeds to step 480.

At step 480, message processing options are provided to the user, prompting the user for a selection. The message processing options provided include at least an option to cancel the instruction to send the message received from the user at step 420. The message processing options may be provided to the user in the form of a menu, for example.

In one embodiment, at least a subset of the following options are provided to the user at step 480:
- "Do not send" - do not send the message (cancel the instruction to send the message previously received from the user);
- "Send anyway" - send this particular message without acting on the verification errors;
- "Don't ask again" - send this particular message without acting on the verification errors, and automatically send subsequent messages without providing message processing options to the user, even when a status verification performed in respect of a subsequent message is unsuccessful, or without performing a status verification in respect of a subsequent message;
- "View certificate" - display certificate data to the user (e.g. of the user's personal certificate or a different certificate that is associated with a verification error).

In one embodiment, an option is provided to the user (e.g. by accessing a menu [not shown in Figures] facilitating user configuration of general secure messaging options) to enable the check status verification mode, if it is disabled. For example, if the mode has been disabled as a result of the user previously selecting the "Don't Ask Again" option, the user may re-enable this mode in this embodiment.

The foregoing labels and descriptions are provided by way of example only, and it will be understood by persons skilled in the art that variants may be employed in a given implementation.

In one embodiment, data describing one or more verification errors identified in the performance of the status verification at step 440 may be displayed to the user when the status verification is unsuccessful. This data may be displayed with the message processing options provided at step 480, or may be displayed with certificate data upon a request by the user to view a personal certificate or other certificate (at step 500d), for example.

The foregoing options are provided by way of example only, and the message processing options provided at step 480 in a given implementation may include all, some or none of the foregoing options, and may include one or more options other than those described herein.

At step 490, a user selection from the message processing options provided to the user at step 480 is received by the messaging application.

At step 500, the message is processed according to the user selection received at step 490. Step 500 may comprise one of the following steps, which correspond to the message processing options provided to the user at step 480 as described above:
- Step 500a (associated with "Do not send") - do not send the message (cancel the instruction to send the message previously received from the user);
- Step 500b (associated with "Send anyway") - send this particular message without acting on the verification errors;
- Step 500c (associated with "Don't ask again") - send this particular message without acting on the verification errors, and automatically send subsequent messages without providing message processing options to the user, even when a status verification performed in respect of a subsequent message is unsuccessful, or without performing a status verification in respect of a subsequent message, which may be implemented by disabling the mode to be checked at step 450 in the performance of a future iteration of method 400;
- Step 500d (associated with "View certificate) - display certificate data to the user (e.g. of the user's personal certificate or a different certificate that is associated with a verification error), and message processing options may be re-displayed to prompt the user to select a different message processing option (flow of method steps proceeds back to step 480).

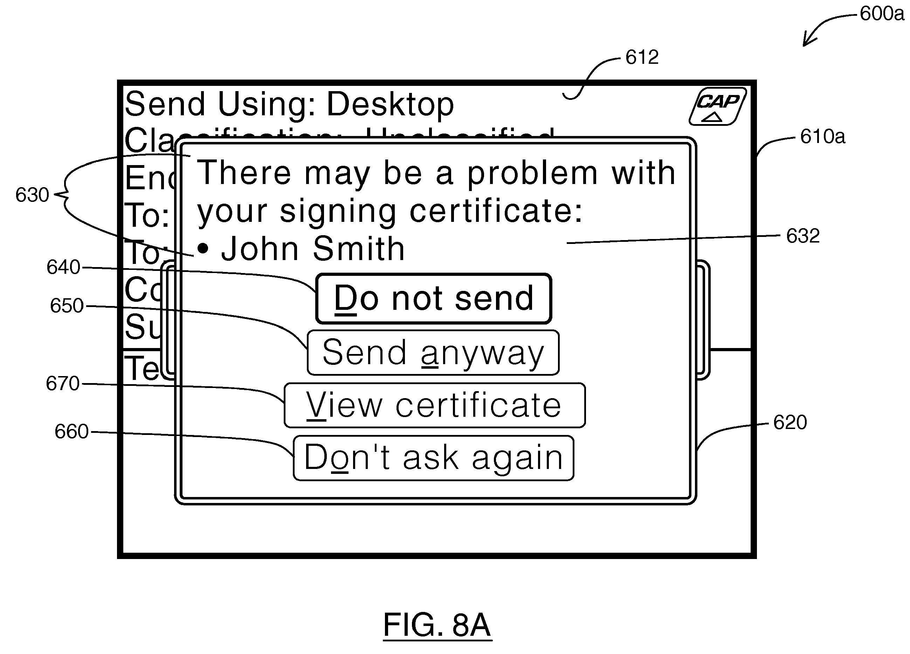

Referring now to FIGS. 8A to 8C, screenshots illustrating screens of a graphical user interface displayed on the display of a computing device in accordance with one example implementation are provided.

In screenshot 600a of FIG. 8A, a graphical user interface (GUI) screen 610a is displayed on the display of a computing device (e.g. display 42 of mobile device 100 of FIG. 1). GUI screen 610a is presented by the messaging application to a user composing a message 612 that is to be signed. GUI screen 610a is shown after the messaging application receives an instruction from the user to send message 612 to a recipient, and where the subsequently performed status verification is unsuccessful. Message processing options are displayed to the user in a dialog box 620. An information field 630 in dialog box 620 contains text that informs the user that a verification error has been encountered. Information field 630 includes an identification of the certificate 632 (e.g. the user's personal certificate) associated with the verification error. Message processing options displayed in dialog box 620 include a "Do not send" option 640, a "Send anyway" option 650, a "Don't ask again" option 660, and a "View certificate" option 670, as described with reference to FIG. 7. An input device (e.g. a trackwheel, trackball, mouse, keyboard, etc.) of the computing device may be employed by the user to make the desired selection, in known manner.

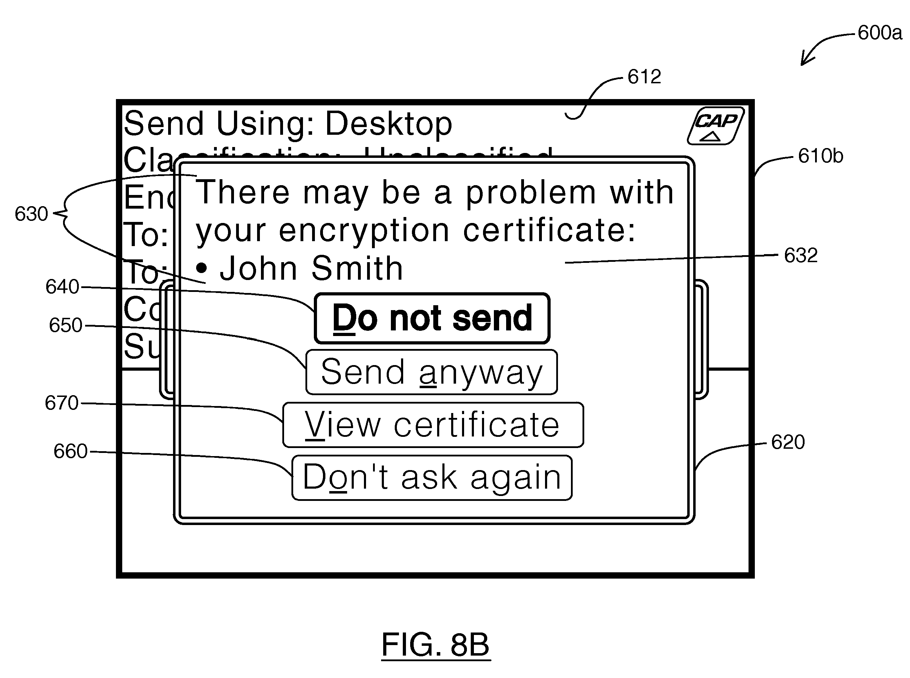

In screenshot 600b of FIG. 8B, a GUI screen 610b is displayed on the display of a computing device (e.g. display 42 of mobile device 100 of FIG. 1). GUI screen 610b is presented by the messaging application to a user composing a message 612 that is to be encrypted. GUI screen 610b is shown after the messaging application receives an instruction from the user to send message 612 to a recipient, and where the subsequently performed status verification is unsuccessful. Message processing options are displayed to the user in a dialog box 620. An information field 630 in dialog box 620 contains text that informs the user that a verification error has been encountered. Information field 630 includes an identification of the certificate 632 (e.g. the user's personal certificate) associated with the verification error. Message processing options displayed in dialog box include a "Do not send" option 640, a "Send anyway" option 650, a "Don't ask again" option 660, and a "View certificate" option 670, as described with reference to FIG. 7. An input device (e.g. a trackwheel, trackball, mouse, keyboard, etc.) of the computing device may be employed by the user to make the desired selection, in known manner.

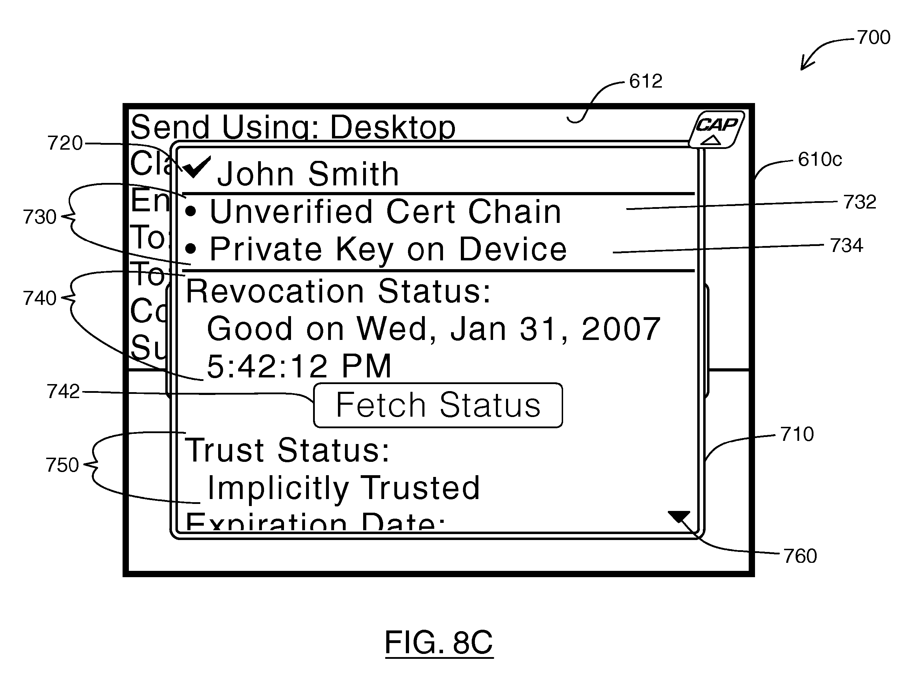

In screenshot 700 of FIG. 8C, a GUI screen 610c is displayed on the display of a computing device (e.g. display 42 of mobile device 100 of FIG. 1). GUI screen 610c is presented by the messaging application to a user composing a message 612. GUI screen 610c is shown after the messaging application receives a selection of option 670 (FIG. 8A, FIG. 8B) from the user requesting that data of certificate 632 (FIG. 8A, FIG. 8B) be displayed. Certificate data is displayed to the user in a dialog box 710. Header field 720 identifies the certificate for which data is being viewed, and may comprise one or more icons associated with the status of certificate. Verification details may be provided in an information field 730, which in this example, includes an indication 732 that a certificate in the certificate chain is unverified, and an indication 734 that the user's private key is stored on the computing device. Revocation status details 740 may be displayed. In this example, an option 742 to retrieve an updated revocation status is provided. Trust status details 750 may be displayed. Other details [not explicitly shown] may also be displayed. An icon 760 may be displayed that indicates that further details may be viewed in the dialog box 710 (e.g. by scrolling), but are not displayed in the current view.

It will be understood by persons skilled in the art that the features of the example user interfaces illustrated in FIGS. 8A to 8C are described with reference to an example implementation, and that variations are possible in different implementations of embodiments of the system and method described herein.

A method in accordance with one or more embodiments described herein may be implemented in a system configured to encrypt messages to the user themselves, whenever the user sends an encrypted message to one or more recipients typically identified in an address field (e.g. "To:", "CC:", "BCC:") of a message being composed. In this example system, the message is also encrypted to the user (typically unbeknownst to the user) using the user's own public key, so that a copy of the message may be saved on the user's computing device also in encrypted form. A status verification performed in accordance with an embodiment described herein may be automatically performed at some point during this "self-encryption" process, but in any event, before the encrypted message is sent to the one or more recipients to which the message is addressed.

The steps of a method of processing messages in accordance with any of the embodiments described herein may be provided as executable software instructions stored on computer-readable media, which may include transmission-type media.

The invention has been described with regard to a number of embodiments. However, it will be understood by persons skilled in the art that other variants and modifications may be made without departing from the scope of the invention as defined in the claims appended hereto.

## Claims

1. A method of processing messages composed by a user of a computing device, the steps of the method performed at the computing device, the method comprising the steps of:
receiving (420) an instruction from the user to send a message (612) composed at the computing device (100), wherein at least some data of the message (612) to be sent is subject to security encoding;
locating (430) one or more certificates on the computing device (100), wherein the one or more certificates comprises at least a personal certificate, wherein the user is the subject of the personal certificate;
performing (440) a status verification at the computing device (100) prior to sending the message (612), wherein at least one status property associated with the one or more certificates is verified;
if the status verification is successful, sending (460) the message (612), or if the status verification is unsuccessful, providing (480) the user with a plurality of message processing options (640, 650, 660, 670), receiving a user selection from the plurality of message processing options (640, 650, 660, 670), and processing the message (612) in accordance with the user selection;
wherein the plurality of message processing options (640, 650, 660, 670) comprises at least an option (640) to cancel the instruction from the user to send the message (612).

2. The method of claim 1, wherein the one or more certificates belong to a certificate chain that comprises the personal certificate.

3. The method of claim 1 or claim 2, wherein the locating step (430) comprises retrieving each of at least one of the one or more certificates from a certificate server (284).

4. The method of any one of the preceding claims, wherein the message (612) subject to security encoding is digitally signed.

5. The method of claim 4, wherein the message (612) is digitally signed using a private key associated with the personal certificate.

6. The method of any one of the preceding claims, wherein the message (612) subject to security encoding is encrypted.

7. The method of any one of the preceding claims, wherein the step of performing (440) the status verification comprises querying one or more servers (286) for data required to verify the at least one status property associated with the one or more certificates.

8. The method of any one of the preceding claims, wherein the plurality of message processing options (640, 650, 660, 670) is displayed to the user in the form of a menu.

9. The method of any one of the preceding claims, wherein the plurality of message processing options (640, 650, 660, 670) further comprises an option (650) to send the message (612).

10. The method of any one of the preceding claims, wherein the plurality of message processing options (640, 650, 660, 670) further comprises an option (660) to send the message (612) and to send subsequent messages for which an instruction to send is received from the user.

11. The method of any one of the preceding claims, wherein the plurality of message processing options (640, 650, 660, 670) further comprises an option (670) to view certificate data of at least one of the one or more certificates.

12. The method of claim 11, wherein the plurality of message processing options (640, 650, 660, 670) further comprises an option (670) to view certificate data of the personal certificate.

13. The method of any one of the preceding claims, wherein if the status verification is unsuccessful, the method further comprises displaying data (732) identifying one or more verification errors.

14. The method of any one of the preceding claims, further comprising the step of disabling a check status verification mode, wherein while the mode is disabled, at least the providing step (480) is not performed in a subsequent iteration of the method.

15. The method of any one of the preceding claims, wherein the computing device (100) is a mobile device (100).

16. A computer-readable medium comprising instructions executable on a processor of the computing device (100) for implementing the method of any one of the preceding claims.

17. A system for processing messages composed by a user of a computing device (100), the system comprising the computing device on which an application executes, wherein the application is programmed to perform the steps of the method as claimed in any one of claims 1 to 15.
